# EUROPÄISCHE PATENTSCHRIFT

(11) **EP 2 781 256 B1**
(45) Veröffentlichungstag und Bekanntmachung des Hinweises auf die Patenterteilung: **07.12.2016**
(21) Anmeldenummer: 13001390.7
(22) Anmeldetag: 18.03.2013
(51) Int. Cl.: B01F 13/10, B01F 15/00, G01F 25/00, G01F 23/00, G01F 23/26

(54) **Verfahren zum Betätigen einer Dosiervorrichtung zur dosierten Abgabe von pumpfähigen Medien, insbesondere von Farbpigmentpräparationen, Dosiervorrichtung sowie Kanister**
Method for actuating a metering device for the metered delivery of pumpable media, in particular of colouring pigment preparations, metering device, and canister
Procédé d'actionnement d'un dispositif de dosage pour la distribution de fluides pouvant être pompés, notamment de préparation de pigments colorés, dispositif de dosage et bidon

(43) Veröffentlichungstag der Anmeldung: 24.09.2014
(73) Patentinhaber: Collomix Rühr-und Mischgeräte GmbH, 85080 Gaimersheim (DE)
(72) Erfinder: Essing, Alexander, 85049 Ingolstadt (DE); Schmidt, Michael, 85117 Eitensheim (DE)
(74) Vertreter: Liebl, Thomas

(56) Entgegenhaltungen:
- WO-A1-2008/013369
- FR-A1- 2 807 762
- KR-A- 20120 105 982
- US-A- 4 437 162
- US-B1- 6 203 183
- US-B1- 6 474 156

## Beschreibung

Die Erfindung betrifft ein Verfahren zum Betätigen einer Dosiervorrichtung zur dosierten Abgabe von pumpfähigen Medien, insbesondere von Farbpigmentpräparationen, nach dem Oberbegriff des Anspruchs 1 sowie eine Dosiervorrichtung nach dem Oberbegriff des Anspruchs 8.

Dosiervorrichtungen zur dosierten Abgabe von pumpfähigen Medien, insbesondere Farbdispenser zur Abgabe von Farbpigmentpräparationen, sind aus der Praxis allgemein bekannt. So umfassen derartige Farbdispenser regelmäßig ein Gehäuse, in dem verschiedene, die Farbpigmentpräparationen enthaltende Kanister untergebracht sind. Diese Kanister sind über fluidleitende Verbindungen mit einer Pumpvorrichtung verbunden, die wiederum mit einer Dosierkopfeinheit strömungstechnisch verbunden ist. Mittels eines derartigen Farbdispensers können somit vorgegebene Farbtöne reproduzierbar zusammengemischt werden, wobei die einzelnen Bauteile konkret mittels einer Rechnereinheit angesteuert werden, in der verschiedene Farbzusammenstellungen gespeichert sind. Die Ausgabe des Mediums erfolgt regelmäßig über einen Dosierkopf der Dosierkopfeinheit, der meist mehrere Ausgabedüsen zur Zudosierung in ein, eine Basisfarbe, zum Beispiel eine weiße oder transparente Farbe, enthaltendes Behältnis aufweist.

Ein derartiger Farbdispenser ist beispielsweise aus der DE 695 15 042 T2 bekannt, bei der mehrere Pumpen und ein die Pumpen antreibender Motor miteinander auf einer gemeinsamen Grundplatte angeordnet und gekoppelt sind. Die Pumpen weisen eine Einlassöffnung und eine Auslassöffnung auf, die über Schlauchleitungen zum einen mit einem zugeordneten Kanister und zum anderen mit einem beabstandet oberhalb der Pumpen und der Kanister angeordneten Abgabeventil strömungstechnisch verbunden sind. Vom Abgabeventil führt zudem eine weitere Schlauchleitung zum Kanister. Mit einem derartigen Aufbau kann über die Pumpe und die entsprechend zugeordneten Schlauchleitungen Fluid über das Abgabeventil zu einem Dosierkopf geführt werden. Ferner kann das Abgabeventil aber auch so geschaltet bzw. gesteuert werden, dass das Fluid über die Schlauchleitungen und das Abgabeventil in einem Kreislauf gepumpt wird. Um die Kanister warten zu können, weist ein mittlerer Gehäusebereich eine Zugangstür auf. Eine weitere Ablage dient als weitere Zugangstüre zum Warten der darunter angeordneten kürzeren Kanister.

Ein vom Prinzip her ähnlicher Aufbau ist auch aus der US 5,328,057 bekannt, bei der die Kanister Deckel aufweisen, durch die Material in diese ein- bzw. nachgefüllt werden kann.

Im Betrieb einer derartigen Dosiervorrichtung werden regelmäßig zu vorgegebenen Zeiten bestimmte Mengen des jeweils in den Kanistern enthaltenen Mediums abgezogen und über die Dosiereinheit bzw. den Dosierkopf abgegeben, wodurch sich der Füllstand in den jeweiligen Kanistern reduziert. Wird dies rein rechnerisch durchgeführt, besteht die Gefahr, dass sich zum Beispiel in Verbindung mit Nachfüll- und Abzugsvorgängen Fehler aufaddieren und somit den Füllstand wesentlich verfälschen können. Dies kann dann dazu führen, dass der gerechnete Füllstand nicht mit dem tatsächlichen Ist-Füllstand übereinstimmt und dadurch zum Beispiel der Kanister ohne das Erkennen einer Nachfüllnotwendigkeit bereits soweit entleert ist, dass aus diesem keine gewünschte Mediummenge mehr abgegeben werden kann.

Des Weiteren ist es allgemein bekannt, Füllstände von pumpfähigen Medien aufweisenden Behältern mittels Füllstandsmessgeräten zu erfassen, beispielsweise über eine Sensoranordnung im Kanister. Durch die Vielzahl der insbesondere bei einem Farbdispenser verwendeten Kanister entstehen dadurch jedoch sehr hohe Kosten, um für jeden der Kanister eine derartige hochwertige und funktionssichere Füllstandsmessung zu realisieren. Deshalb werden die Füllstände oftmals auch durch das Einführen eines Stabes manuell gemessen, was natürlich keine genauen und damit zufriedenstellenden Ergebnisse bringt.

Aus der weiteren FR 2 807 762 A ist eine Farbdosiervorrichtung bekannt, bei der mehrere Behälter vorgesehen sind, die jeweils mit einer definierten Ausgangsfüllmenge einer Farbbasislösung befüllt sind. Diese Behälter sind unter Zwischenschaltung von Sekundärbehältern, in denen die Farbbasislösungen mit Wasser vermischt werden, strömungstechnisch mit einer Ausgabeeinrichtung der Dosiervorrichtung verbunden, mittels der fertig gemischte Farblösungen ausgegeben werden können.

Aufgabe der vorliegenden Erfindung ist es, ein Verfahren zum Betätigen einer Dosiervorrichtung zur dosierten Abgabe von pumpfähigen Medien, insbesondere zur dosierten Abgabe von Farbpigmentpräparationen, zur Verfügung zu stellen, mittels dem eine Füllstandskontrolle des Füllstandes in den jeweiligen Behältern auf einfache, funktionssichere und preiswerte Weise durchgeführt werden kann. Des Weiteren ist es eine Aufgabe der vorliegenden Erfindung, eine Dosiervorrichtung zur Verfügung zu stellen, mittels der ein derartiges Verfahren auf einfache, funktionssichere und preiswerte Weise durchgeführt werden kann. Zudem ist es eine weitere Aufgabe der Erfindung, einen geeigneten Kanister zur Verwendung in einem erfindungsgemäßen Verfahren bzw. zur Verwendung in einer erfindungsgemäßen Dosiervorrichtung vorzuschlagen.

Diese Aufgabe wird gelöst mit den Merkmalen der unabhängigen Patentansprüche. Vorteilhafte Ausgestaltungen sind Gegenstand der darauf rückbezogenen Unteransprüche.

Gemäß Anspruch 1 wird ein Verfahren zum Betätigen einer Dosiervorrichtung zur dosierten Abgabe von pumpfähigen Medien, insbesondere von Farbpigmentpräparationen, vorgeschlagen, wobei die Dosiervorrichtung eine Ausgabeeinrichtung, insbesondere eine Dosierkopfeinheit mit einem Dosierkopf, aufweist, die mit mehreren Kanistern strömungstechnisch verbunden ist, wobei die Kanister jeweils mit einer definierten Menge eines abzugebenden Mediums befüllt sind oder werden und wobei die Dosiervorrichtung eine Steuereinrichtung aufweist, mittels der zu definierten Zeiten eine definierte Abgabemenge des Mediums aus wenigstens einem der Kanister abgezogen und mittels einer Fördereinrichtung zu der Ausgabeeinrichtung gefördert wird. Erfindungsgemäß wird mittels der Steuereinrichtung in Abhängigkeit von einer aus dem jeweiligen Kanister abgezogenen Abgabemenge ein aktueller Ist-Füllstand ermittelt und/oder errechnet, wobei am Kanister, vorzugsweise an einer Außenwand des Kanisters, wenigstens ein Kalibriersensor, insbesondere ein kapazitiver Sensor, so angeordnet ist, dass dieser für den Fall, dass das Medium im Kanister wenigstens einen definierten, vorbekannten, in der Steuereinrichtung gespeicherten Kalibrier-Füllstand erreicht, anspricht und an die Steuereinrichtung ein entsprechendes Sensorsignal übermittelt, auf dessen Basis die Steuereinrichtung den Kalibrier-Füllstand als tatsächlichen Ist-Füllstand erkennt und/oder als neuen, aktuellen Ist-Füllstand übernimmt.

Zudem wird mittels der Steuereinrichtung zur Füllstandskontrolle und/oder Füllstandsermittlung ein jeweiliger aktueller Ist-Füllstand für die Kanister dergestalt ermittelt, dass der jeweils aktuell von der Steuereinrichtung gespeicherte Ist-Füllstand eines Kanisters um den Wert reduziert wird, der der vom Kanister abgezogenen Abgabemenge entspricht, und anschließend der um diese Abgabemenge reduzierte Wert den neuen, aktuellen Ist-Füllstand darstellt und entsprechend gespeichert wird. Die Steuereinrichtung vergleicht weiter einen aktuell gespeicherten Ist-Füllstand mit wenigstens einem vorgegebenen Füllstands-Schwellwert, wobei für den Fall, dass bei einem Kanister ein neuer, aktueller Ist-Füllstand einen vorgegebenen Füllstands-Schwellwert erreicht oder unterschreitet, ein Nachfüllhinweis ausgegeben und/oder angezeigt wird. Im Falle einer von der Steuereinrichtung ermittelten Nachfüllnotwendigkeit wird der Kanister mit einer definierten Nachfüllmenge befüllt, wobei die Nachfüllmenge von der Steuereinrichtung erfasst wird und/oder dieser übermittelt wird und/oder in diese eingegeben wird. Weiter übernimmt die Steuereinrichtung nach dem Befüllvorgang als Startwert für den aktuellen Ist-Füllstandswert einen Wert, der sich aus der Summe eines der Nachfüllmenge entsprechenden Nachfüll-Füllstandswertes und dem letzten gespeicherten Ist-Füllstand zusammensetzt. Für den Fall, dass der Füllstand des Mediums dem wenigstens einen Kalibrier-Füllstand entspricht, spricht der wenigstens eine Kalibriersensor an und übermittelt an die Steuereinrichtung ein Signal, auf dessen Basis die Steuereinrichtung den Kalibrier-Füllstand als tatsächlichen Ist-Füllstand erkennt und/oder als neuen, aktuellen Ist-Füllstand übernimmt.

Mit einer derartigen Anordnung eines Kalibiersensors wird somit ein System geschaffen, mittels dem auf einfache und zudem auch funktionssichere Weise sichergestellt wird, dass der Füllstand im Behälter nicht unter einen kritischen Minimalwert absinken kann. Zudem wird dadurch ein selbstkalibrierendes System geschaffen, mit dem zumindest zu bestimmten Zeiten überprüft werden kann, ob der von der Steuereinrichtung rechnerisch ermittelte aktuelle Ist-Füllstand auch wirklich dem tatsächlichen Ist-Füllstand im jeweiligen Kanister entspricht.

Des Weiteren kann mittels einer derartigen Verfahrensführung auf einfache Weise von der Steuereinrichtung ein jeweiliger aktueller Ist-Füllstand errechnet bzw. ermittelt werden, wobei hier aber nach wie vor die Gefahr besteht, dass sich bestimmte Ungenauigkeiten beziehungsweise Fehler, insbesondere im Hinblick auf die Nachfüllmenge, aufaddieren und sich in einem unkorrekten Wert für den Füllstands-Schwellwert niederschlagen können. Dies zu vermeiden hilft ebenfalls bzw. vor allem der erfindungsgemäß vorgesehene wenigstens eine Kalibriersensor, der für den Fall, dass der Füllstand des Mediums dem vorbekannten wenigstens einen Kalibrier-Füllstand entspricht, anspricht und an die Steuereinrichtung ein Signal übermittelt, auf dessen Basis die Steuereinrichtung den Kalibrier-Füllstand als tatsächlichen Ist-Füllstand erkennt und/oder als neuen, aktuellen Ist-Füllstand übernimmt. Dadurch kann, wie bereits zuvor ausgeführt, auf einfache und zudem auch funktionssichere Weise ein selbstkalibrierendes System bereitgestellt werden, mit dem zumindest zu bestimmten Zeiten überprüft wird, ob der von der Steuereinrichtung rechnerisch ermittelte aktuelle Ist-Füllstand auch wirklich dem tatsächlichen Ist-Füllstand im jeweiligen Kanister entspricht und zudem zuverlässig das Absinken des Füllstands unter einen Minimalwert vermieden werden.

Besonders vorteilhaft ist weiter eine Verfahrensführung, bei der der Steuereinrichtung vor der erstmaligen Entnahme von Medium aus einem Kanister ein einer Ausgangsfüllmenge entsprechender Ausgangsfüllstand des jeweiligen Kanisters als Startwert für den aktuellen Ist-Füllstand vorgegeben und/oder eingegeben wird.

Grundsätzlich kann der wenigstens eine Kalibriersensor so am Kanister und/oder in einer solchen Kanisterhöhe angeordnet sein, dass der Kalibrier-Füllstand dem oder einem vorgegebenen Füllstands-Schwellwert, bei dessen Erreichen ein Nachfüllhinweis angezeigt wird, entspricht, weil dann gleichzeitig mit dem Erfassen einer Nachfüllnotwendigkeit auch die Kalibrierung der als Füllstandsmesseinrichtung fungierenden Steuereinrichtung vorgenommen werden kann.

Gemäß einer weiteren besonders bevorzugten Ausgestaltung wird vorgeschlagen, dass von der Steuereinrichtung für vorzugsweise jeden der Kanister ein erster Füllstands-Schwellwert vorgegeben ist, bei dessen Erreichen die Steuereinrichtung einen Nachfüllhinweis für den oder die jeweiligen Kanister ausgibt. Weiter ist von der Steuereinrichtung für vorzugsweise jeden der Kanister ein zweiter Füllstands-Schwellwert vorgegeben, der einem niedrigeren Füllstand entspricht als der dem ersten Füllstands-Schwellwert zugeordnete Füllstand, vorzugsweise einem MinimalFüllstand entspricht. Bei dessen Erreichen gibt die Steuereinrichtung einen weiteren Warn- und/oder Nachfüllhinweis für den oder die jeweiligen Kanister aus. Zum Beispiel wird hier die Dosiervorrichtung bevorzugt solange deaktiviert, bis ein Nachfüllvorgang für den oder die jeweiligen Kanister stattgefunden hat und/oder ein solcher erfasst und/oder eingegeben wird. Mit einer derartigen gestuften Warnung bleibt zum Beispiel nach dem Erhalt des ersten Warnhinweises genügend Zeit, um den Nachfüllvorgang durchzuführen. Dies kann zum Beispiel durch eine Kontrolleuchte an einem Display angezeigt werden. Wird diesem Nachfüllhinweis nicht nachgegangen und der zweite Schwellwert erreicht, besteht die Gefahr, dass nicht mehr genügend Medium im Kanister ist und dementsprechend keine ordnungsgemäße Abgabe des Mediums mehr erfolgen kann. In diesem Fall wird dann ein verschärfter Warnhinweis ausgegeben, zum Beispiel ein akustisches Signal und/oder die Dosiervorrichtung deaktiviert und der Nachfüllvorgang mehr oder weniger erzwungen. Dies erhöht die Abgabesicherheit beim Dosieren von Medien wesentlich.

Mit der vorstehend auch in Verbindung mit den optionalen Ausgestaltungen gewürdigten erfindungsgemäßen Verfahrensführung bzw. Füllstandsermittlung und/oder Füllstandskontrolle lässt sich somit insbesondere in solchen Dosiervorrichtungen, bei denen mehrere Kanister vorgesehen sind, eine Füllstandskontrolle sowohl auf funktionssichere als auch auf einfache und preiswerte Weise durchführen, weil hier die Füllstandsermittlung zwar nach wie vor auf einfache Weise im Wesentlichen rechnerisch erfolgt, aber zu gegebenen Zeiten mittels eines baulich einfachen und damit preiswerten Kalibriersensors eine vorteilhafte Selbstkalibrierung des Systems vorgenommen werden kann.

Als Kalibriersensor wird bevorzugt ein kapazitiver Sensor verwendet, der bei einem Absinken des Füllstandes im Kanister dergestalt, dass das sich im Kanister befindliche pumpfähige Medium einen bestimmten, definierten Abstand von ihm aufweist und damit die Umgebung seiner aktiven Zone verlässt, sein elektrisches Feld ändert, was signaltechnisch erfasst und durch die Steuereinrichtung entsprechend ausgewertet werden kann. Ein derartiger Sensor besteht in seinem Grundaufbau zum Beispiel aus einem RC-Oszillator als Aufnehmer, einem Demodulator und einer Ausgangsstufe, wobei die aktive Fläche des kapazitiven Sensors von zwei in der Regel metallischen Elektroden gebildet wird. Solange sich also das pumpfähige Medium in der aktiven Zone des elektrischen Feldes der Elektrodenfläche befindet, liegt stets eine gleiche Kapazität vor. Sobald der Füllstand aber soweit absinkt, dass sich kein pumpfähiges Medium mehr im Bereich der aktiven Zone des Sensors befindet, ändert sich das elektrische Feld und wird die Koppelkapazität geändert, wodurch der Oszillator zu schwingen beginnt. Gemäß einer besonders bevorzugten Ausgestaltung wird ein Kalibriersensor vorgeschlagen, dessen Sensorflächen auf gegenüberliegenden Seiten des Kanisters und/oder an der Kanisteraußenwand angeordnet sind.

Der Vorteil derartiger kapazitiver Sensoren liegt darin, dass sie sowohl von leitenden als auch von nicht leitenden Materialen betätigt werden können und somit auf einfache Weise auch Füllstandsänderungen von zum Beispiel Farbpigmentpräparationen gut erfassen können.

Derartige Kalibriersensoren können zudem auf einfache Weise auch an der Außenseite bzw. einer Außenwand des Kanisters angebracht werden und müssen nicht in aufwendiger Weise, wie dies bei anderen Sensoranordnungen der Fall ist, im Inneren des Kanisters angeordnet werden. Zudem können derartige Kalibriersensoren zum Beispiel stoffschlüssig mit der Außenwand des Kanisters verbunden werden, zum Beispiel dort aufgeklebt werden. Besonders bevorzugt ist in diesem Zusammenhang zum Beispiel ein Aufbau eines Kalibriesensors als Foliensensor, weil sich dieser sehr gut an die Außenwandgeometrien von Kanistern anschmiegt und einen insgesamt kleinbauenden Aufbau aufweist.

Insgesamt lässt sich somit mit einer derartigen erfindungsgemäßen Verfahrensführung eine baulich einfache und damit preiswert herzustellende, sowie vor allem auch zuverlässige und funktionssichere Füllstandsmessung durchführen.

Eine erfindungsgemäße Dosiervorrichtung zur dosierten Abgabe von pumpfähigen Medien, insbesondere von Farbpigmentpräparationen, weist eine Ausgabeeinrichtung, insbesondere eine Dosierkopfeinheit mit einem Dosierkopf, auf, die mit mehreren Kanistern strömungstechnisch verbunden ist, wobei die Kanister jeweils mit einer definierten Menge eines abzugebenden Mediums befüllt sind oder befüllt werden können, und wobei die Dosiervorrichtung eine Steuereinrichtung aufweist, mittels der zu definierten Zeiten eine definierte Abgabemenge des Mediums aus wenigstens einem der Kanister abgezogen und mittels einer Fördereinrichtung zu der Ausgabeeinrichtung gefördert werden kann. Erfindungsgemäß weist die Steuereinrichtung eine Füllstand-Ermittlungseinheit auf, mittels der in Abhängigkeit von einer aus dem jeweiligen Kanister abgezogenen Abgabemenge ein aktueller Ist-Füllstand ermittelt und/oder errechnet werden, wobei am Kanister, vorzugsweise an einer Außenwand des Kanisters, wenigstens ein signalübertragend mit der Steuereinrichtung gekoppelter Kalibriersensor, insbesondere ein kapazitiver Sensor, so angeordnet ist, dass dieser für den Fall, dass das Medium im Kanister wenigstens einen definierten, vorbekannten, in der Steuereinrichtung gespeicherten Kalibrier-Füllstand erreicht, anspricht und an die Steuereinrichtung ein entsprechendes Sensorsignal übermittelt, auf dessen Basis die Steuereinrichtung den Kalibrier-Füllstand als tatsächlichen Ist-Füllstand erkennt und/oder als neuen, aktuellen Ist-Füllstand übernimmt. Zudem kann mittels der Steuereinrichtung zur Füllstandskontrolle und/oder Füllstandsermittlung ein jeweiliger aktueller Ist-Füllstand für die Kanister dergestalt ermittelt werden, dass der jeweils aktuell von der Steuereinrichtung gespeicherte Ist-Füllstand eines Kanisters um den Wert reduziert wird, der der vom Kanister abgezogenen Abgabemenge entspricht, und anschließend der um diese Abgabemenge reduzierte Wert den neuen, aktuellen Ist-Füllstand darstellt und entsprechend gespeichert werden kann. Die Steuereinrichtung vergleicht weiter einen aktuell gespeicherten Ist-Füllstand mit wenigstens einem vorgegebenen Füllstands-Schwellwert, wobei für den Fall, dass bei einem Kanister ein neuer, aktueller Ist-Füllstand einen vorgegebenen Füllstands-Schwellwert erreicht oder unterschreitet, ein Nachfüllhinweis ausgegeben und/oder angezeigt werden kann. Im Falle einer von der Steuereinrichtung ermittelten Nachfüllnotwendigkeit kann der Kanister mit einer definierten Nachfüllmenge befüllt werden, wobei die Nachfüllmenge von der Steuereinrichtung erfasst und/oder dieser übermittelt werden kann und/oder in diese eingegeben werden kann. Weiter übernimmt die Steuereinrichtung nach dem Befüllvorgang als Startwert für den aktuellen Ist-Füllstandswert einen Wert, der sich aus der Summe eines der Nachfüllmenge entsprechenden Nachfüll-Füllstandswertes und dem letzten gespeicherten Ist-Füllstand zusammensetzt. Für den Fall, dass der Füllstand des Mediums dem wenigstens einen Kalibrier-Füllstand entspricht, spricht der wenigstens eine Kalibriersensor an und übermittelt an die Steuereinrichtung ein Signal, auf dessen Basis die Steuereinrichtung den Kalibrier-Füllstand als tatsächlichen Ist-Füllstand erkennt und/oder als neuen, aktuellen Ist-Füllstand übernimmt.

Weiter ist vorgesehen, dass die Steuereinrichtung eine Kalibriereinheit aufweist, mittels der entweder auf der Basis einer von ihr mittels einer Vergleichereinheit festgestellten definierten Abweichung des Kalibrier-Füllstands als tatsächlicher Ist-Füllstand von dem von der Steuereinrichtung ermittelten aktuellen Ist-Füllstand oder ohne weitere Überprüfung der Kalibrier-Füllstand als neuer aktueller Ist-Füllstand vorgebbar ist.

Zudem weist die Steuereinrichtung eine Füllstands-Ermittlungseinheit auf, mittels der ein jeweiliger Ist-Füllstand für die Kanister in Abhängigkeit von einer vom Kanister abgezogenen Abgabemenge ermittelbar ist. Weiter weist die Steuereinrichtung eine Füllstand-Speichereinheit auf, in der der in Abhängigkeit von einer abgezogenen Abgabemenge reduzierte Füllstandswert als neuer, aktueller Ist-Füllstand speicherbar ist.

Die Steuereinrichtung weist weiter eine Vergleichereinheit auf, mittels der ein aktuell gespeicherter Ist-Füllstand mit wenigstens einem vorgegebenen Füllstands-Schwellwert vergleichbar ist. Ferner weist die Steuereinrichtung eine Hinweis - und/oder Signaleinrichtung auf, zum Beispiel eine optische und/oder akustische Anzeige, mittels der ein festgestellter notwendiger Nachfüllvorgang anzeigbar ist. Die Steuereinrichtung weist weiter eine Füllstand-Startwert-Setzeinheit auf, mittels der ein Befüllvorgang erfassbar und/oder nach einem Befüllvorgang ein Startwert für den aktuellen Ist-Füllstand vorgebbar ist.

Mit einer derartigen erfindungsgemäßen Dosiervorrichtung lässt sich insbesondere die erfindungsgemäße Verfahrensführung auf besonders einfache und funktionssichere Weise durchführen. Die sich dadurch ergebenden Vorteile wurden bereits zuvor in Verbindung mit der Beschreibung der Vorteile der Verfahrensführung näher erläutert. Insofern wird auf die zuvor gemachten Ausführungen verwiesen.

Die Begrifflichkeit Kanister ist hier in einem umfassenden Sinne zu verstehen. Wie die zuvor und auch nachstehend gemachten Ausführungen zeigen bzw. zeigen werden, handelt es sich bei einem Kanister um eine Dosiereinrichtung für den Einsatz in einer Dosiervorrichtung, wie zum Beispiel einem Farbdispenser, wobei in der Dosiereinrichtung das jeweilige pumpfähige Medium, insbesondere eine Farbpigmentpräparation, aufgenommen ist und aus der Dosiereinrichtung zu vorgegebenen Zeiten eine definierte Menge des pumpfähigen Mediums abgezogen wird, insbesondere mittels der Dosiervorrichtung abgezogen wird. Die Begrifflichkeit Kanister stellt somit hier ausdrücklich ein Synonym für die Begrifflichkeit Dosiereinrichtung dar.

An dieser Stelle soll zudem ausdrücklich erwähnt werden, dass die Begrifflichkeit Steuereinrichtung sowohl vorstehend als auch nachstehend stets in einem umfassenden Sinne zu verstehen ist und eine Einheit darstellt, die mehrere Untereinheiten aufweist bzw. mit mehreren Untereinheiten zusammenwirkt. Diese Untereinheiten können durch beliebige Baueinheiten der Dosiervorrichtung gebildet sein.

Die Erfindung wird nachfolgend anhand einer Zeichnung näher erläutert.

Es zeigen:
- Fig. 1: schematisch und perspektivisch einen, eine Dosiervorrichtung ausbildenden Farbdispenser zur dosierten Abgabe von pumpfähigen Medien, insbesondere zur dosierten Abgabe von Farbpigmentpräparationen, mit einer Mehrzahl von in der Dosiervorrichtung aufgenommenen Kanistern,
- Fig. 2: schematische eine vergrößerte Detaildarstellung eines Kanisters mit einem an der Kanisteraußenwand angeordneten kapazitiven Sensor, und
- Fig. 3: schematisch und prinzipiell als Blockschaltbild eine beispielhafte Ausführung einer Füllstands-Ermittlungseinheit einer Steuereinrichtung des Farbdispensers.

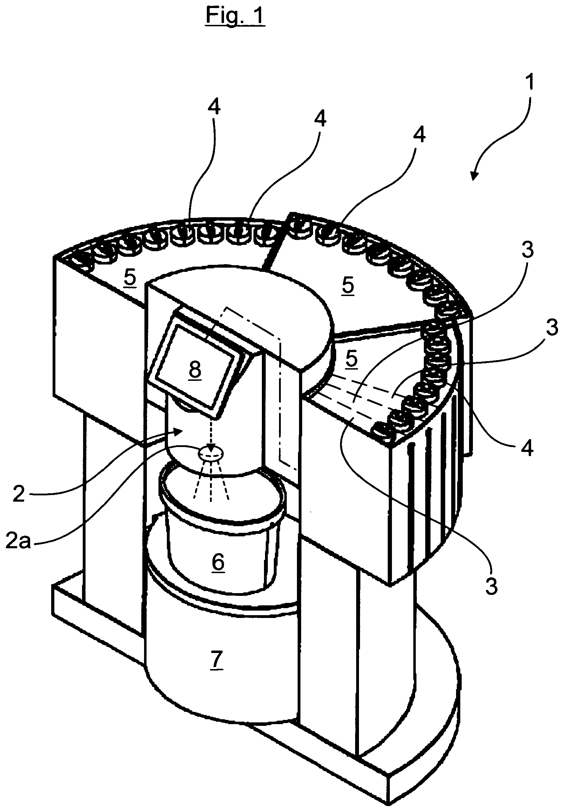

In der Fig. 1 ist schematisch und perspektivisch eine als Farbdispenser 1 fungierende Dosiervorrichtung zur Abgabe von hier beispielsweise Farben beziehungsweise Farbpigmentpräparationen gezeigt. Um eine zentrale Dosierkopfeinheit 2 herum sind eine Vielzahl von, mit ihren Längsseiten im Wesentlichen aneinander anliegenden bzw. mit einem definierten Spaltabstand voneinander beabstandeten Kanistern 3 halbkreisförmig angeordnet, wobei von den Kanistern 3 hier lediglich jeweils ein, eine Nachfüllöffnung verschließender Verschlussdeckel 4 sichtbar ist und die Kanisteroberseiten ansonsten von einer Bestandteil einer Gehäusewand des Farbdispensers 1 bildenden Abdeckplatte 5 abgedeckt sind. Die Abdeckplatte 5 ist abnehmbar, sodass die Kanister 3 bzw. deren Wartungsöffnungen zugänglich sind, was nachfolgend noch näher beschrieben wird. Die Kanister 3 weisen hier bevorzugt eine tortenstückartige bzw. keilförmige Außenkontur auf, wobei, wie in der Fig. 1 schematisch dargestellt, gegebenenfalls auch unterschiedlich lange bzw. große Kanister 3 verwendet werden können.

Die Kanister 3 sind mit unterschiedlichen Farbpigmentpräparationen befüllt und können, was nachfolgend noch ausführlich erläutert wird, durch entsprechende Ansteuerung ihre jeweilige Farbpigmentpräparation zum Dosierkopf 2a der Dosierkopfeinheit 2 fördern, wo die jeweilige Farbpigmentpräparation in ein, eine Grundfarbe, zum Beispiel weiß oder transparent, aufweisendes Mischgefäß 6 eingebracht wird, das hier beispielhaft auf einer podestartigen Aufnahme 7 des Farbdispensers 1 angeordnet ist.

Die Dosierkopfeinheit 2 mitsamt einer dieser zugeordneten, die Kanister 3 aufnehmenden Gehäuseeinheit ist wie dargestellt beabstandet oberhalb einer Aufstandsfläche des Farbdispensers 1 und beabstandet oberhalb der Aufnahme 7 für das Mischgefäß 6 angeordnet.

An der Dosierkopfeinheit 2 ist ferner eine hier beispielhaft durch einen Steuerungsrechner dargestellte Steuereinrichtung 8 angeordnet, in der verschiedene Farb-Zusammenstellungen abgespeichert sind und dementsprechend unterschiedliche Farbmischungen mittels des Farbdispensers 1 bereitgestellt werden können.

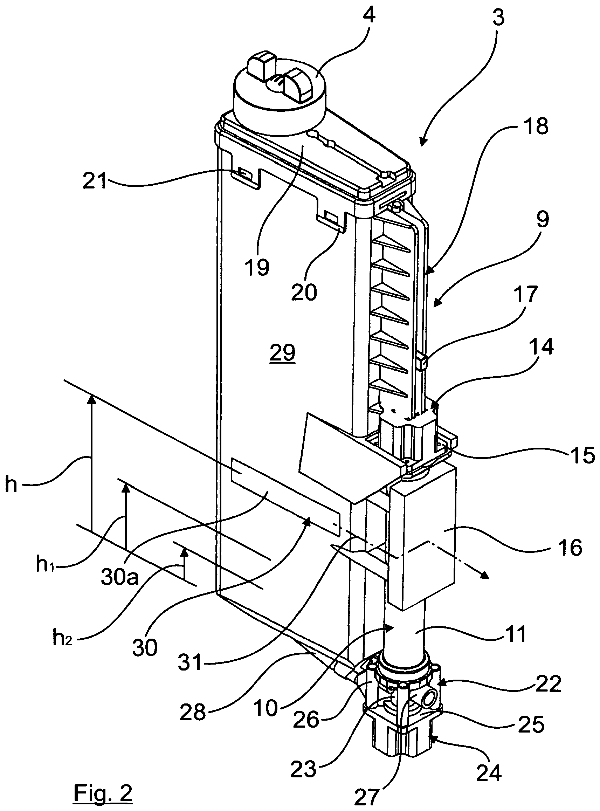

Die in Fig. 1 bevorzugt und beispielhaft als tortenstückartig bzw. keilförmig zulaufende Behälter ausgebildeten Kanister 3 können prinzipiell so aufgebaut sein, wie dies in der Fig. 2 dargestellt ist, wobei die Kanister 3 grundsätzlich auch jede andere Form aufweisen können, zum Beispiel als runde oder rechteckförmige Behälter ausgebildet sein können.

An einer der Dosierkopfeinheit 2 zugeordneten Schmalseite 9 des Kanisters ist eine sich über wenigstens einen Teilbereich der Schmalseitenlänge erstreckende Zylinder-Kolben-Pumpe 10 angeordnet, die einen Pumpenzylinder 11 aufweist, der mit dem Kanister 3 bzw. dessen Schmalseite 9 verbunden ist bzw. an diesem angeordnet ist, gegebenenfalls auch materialeinheitlich und/oder einstückig mit diesem verbunden ist. In diesem Pumpenzylinder 11 ist ein Kolben der Zylinder-Kolbenpumpe 10 verschiebbar geführt, wozu der Kolben mit einer hier nicht dargestellten Kolbenstange verbunden ist.

Am, in Hochachsenrichtung des Kanisters 3 gesehen oberen Ende des Pumpenzylinders 11 wirkt die Kolbenstange mit einer hier nicht dargestellten Spindelmutter einer Kolben-Betätigungseinrichtung 14 zusammen, wobei die Kolben-Betätigungseinrichtung 14 bzw. deren Gehäuse einen Anschlussflansch 15 aufweist, der mittels mehrerer hier nicht gezeigter Schraubverbindungen mit einem zugeordneten Anschlussflanschbereich des oberen Endes des Pumpenzylinders 11 fest verbunden ist.

Die Kolben-Betätigungseinrichtung 14 kann zum Beispiel durch einen Schrittmotor gebildet sein, der die hier nicht dargestellte Spindelmutter in die eine oder andere Richtung antreibt, wodurch die Kolbenstange und damit der Kolben entsprechend nach oben oder nach unten im Pumpenzylinder 11 verlagert werden kann. Die Ansteuerung dieses Schrittmotors erfolgt beispielsweise über die an der Außenseite des Pumpenzylinders 11 angeordnete und hier lediglich äußerst schematisch und beispielhaft dargestellte Steuerelektronik 16, die Bestandteil der Steuereinrichtung 8 bildet bzw. mit dieser zusammenwirkt.

An einem die Kolben-Betätigungseinrichtung 14 überragenden freien Endbereich der Kolbenstange ist ein Gleitstein 17 angeordnet, der in einer an der Schmalseite 9 des Kanisters 3 ausgebildeten Führungsnut 18 verschiebbar geführt und aufgenommen ist.

An einem der Kolben-Betätigungseinrichtung 14 gegenüberliegenden Endbereich des Pumpenzylinders 11 ist ein Mehrwegeventil 22 dergestalt angeordnet, dass der Pumpenzylinder 11 mit einem in Hochachsenrichtung unteren freien Endbereich unmittelbar an ein Ventilgehäuse 23 des Mehrwegeventils 22 anschließt.

In Hochachsenrichtung nach unten gesehen schließt sich weiter an das Ventilgehäuse 23 eine Ventil-Betätigungseinrichtung 24 an. Diese zum Beispiel einen Aktor aufweisende Ventil-Betätigungseinrichtung 24 weist einen Anschraubflansch 25 auf, der mehreren, in Umfangsrichtung um das Ventilgehäuse 23 herum angeordneten und voneinander beabstandeten Schraubdomen 26 dergestalt zugeordnet ist, dass die Ventil-Betätigungseinrichtung 24 mittels mehrerer hier nicht dargestellter Befestigungsschrauben durch den Anschraubflansch 25 hindurch in die Schraubdome 26 und damit an das Ventilgehäuse 23 anschraubbar ist, um die Ventil-Betätigungseinrichtung 24 bzw. deren Gehäuse fest mit dem Ventilgehäuse 23 zu verbinden.

Die Ansteuerung der Ventil-Betätigungseinrichtung 24 erfolgt dabei ebenfalls wiederum bevorzugt über die Steuerelektronik 16, die wiederum programmgesteuert, wie bereits zuvor ausgeführt, mittels der Steuereinrichtung 8 angesteuert wird.

Das Mehrwegeventil 22 ist über einen Schlauchanschluss 27 mit der Dosierkopfeinheit 2 strömungsverbunden, was hier aber nicht im Detail dargestellt ist. Ebenso ist das Mehrwegeventil 22 über wenigstens einen Strömungskanal 28 mit dem Kanisterinnenraum strömungsverbunden, so dass, entsprechend angesteuert durch die Steuerungselektronik 16 bei einer Pumpenbetätigung, Farbpigmentpräparation aus dem Innenraum des Kanisters über den Strömungskanal 28 und das Mehrwegeventil 22 in den Pumpenzylinder 11 eingesaugt werden kann. Anschließend kann dann bei einer entsprechenden umgekehrten Kolbenverlagerung die in den Pumpenzylinder 11 angesaugte Farbpigmentpräparation aus diesem sowie weiter über den Schlauchanschluss 27 zur Dosierkopfeinheit 2 ausgeschoben bzw. ausgepumpt werden.

An der Außenwand 29 des Kanisters 3, die hier beispielhaft durch eine Längsseite des Kanisters 3 gebildet ist, ist in einer in Hochachsenrichtung gesehen definierten Kanisterhöhe h ein zum Beispiel durch einen kapazitiven Sensor gebildeter Kalibriersensor 30 angeordnet, der hier beispielhaft zwei Sensorflächen 30a aufweist, die auf gegenüberliegenden Außenwänden 29 des Kanisters 3 in der Kanisterhöhe h angeordnet sind, so dass in der Fig. 2 lediglich eine der beiden Sensorflächen 30a gezeigt ist. Der Kalibriersensor 30 bzw. dessen Sensorflächen 30a ist hier lediglich beispielsweise als Foliensensor ausgebildet. Die Sensorflächen 30a weisen hier weiter beispielhaft eine rechteckförmige Form auf und erstrecken sich im Wesentlichen über die gesamte Breite der Kanisteraußenwand. Die Höhe h könnte zum Beispiel einem Füllstand, zum Beispiel auch dem Minimalfüllstand, der Farbpigmentpräparation im jeweiligen Kanister 3 entsprechen, ab dem eine Nachfüllnotwendigkeit mittels der Steuereinrichtung 8 angezeigt werden soll. In der in der Fig. 2 gezeigten beispielhaften Ausführungsform liegt die Kanister- bzw. Kalibriersensorhöhe h oberhalb einer rechnerisch ermittelbaren Warn-Füllstandshöhe h₁, bei der ein Warnsignal ausgegeben wird, das die Nachfüllnotwendigkeit anzeigt, was nachfolgend noch näher erläutert wird. Diese Warn-Füllstandshöhe h₁ liegt wiederum oberhalb einer weiteren rechnerisch ermittelbaren Minimal-Füllstandshöhe h₂, bei deren Erreichen ein weiteres Warnsignal (verschärft gegenüber der ersten Warnstufe) ausgegeben wird, zum Beispiel der Betrieb des Farbdispensers 1 gestoppt wird, was ebenfalls nachfolgend noch näher erläutert wird.

Der Kalibriersensor 30 bzw. dessen Sensorflächen 30a ist bzw. sind, was in der Fig. 2 lediglich äußerst schematisch durch den strichpunktierten Pfeil 31 dargestellt ist, ggf. unter Zwischenschaltung der Steuerungselektronik 16, signalübertragend mit der Steuereinrichtung 8 verbunden.

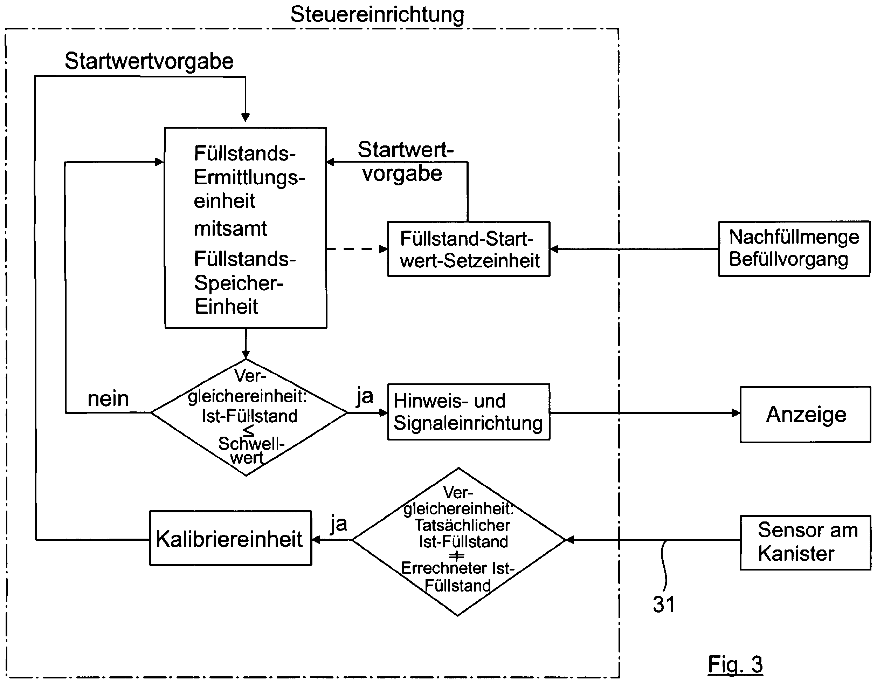

Wie dies in der Fig. 3 lediglich äußerst schematisch und beispielhaft dargestellt ist, umfasst die Steuereinrichtung 8 eine Füllstands-Ermittlungseinheit, mittels der ein jeweiliger Ist-Füllstand für die Kanister 3 in Abhängigkeit von einer vom Kanister 3 abgezogenen Abgabemenge dergestalt ermittelt wird, dass der jeweils aktuell von der Steuereinrichtung in einer Füllstands-Speichereinheit abgespeicherte Ist-Füllstand eines Kanisters um den Wert reduziert wird, der der vom Kanister 3 abgezogenen Abgabemenge entspricht, wobei anschließend der um diese Abgabemenge reduzierte Wert den neuen, aktuellen Ist-Füllstand darstellt und dieser Wert entsprechend in der Füllstands-Speichereinheit abgespeichert wird. Die Steuereinrichtung 8 bzw. die Füllstands-Ermittlungseinheit verwendet dabei vor der erstmaligen Entnahme von Medium aus einem Kanister 3 einen der Ausgangsfüllmenge entsprechenden Ausgangsfüllstand des jeweiligen Kanisters 3 als Startwert für den aktuellen Ist-Füllstand, der zum Beispiel von der Steuereinrichtung 8 erfasst wird bzw. dieser eingegeben wird.

Mittels einer Vergleichereinheit der Steuereinrichtung 8 kann ein aktuell gespeicherter Ist-Füllstand mit einem von der Steuereinrichtung 8 errechneten Füllstands-Schwellwert, der der Höhe h₁ bzw. der Höhe h₂ entspricht, verglichen werden, wobei für den Fall, dass der neue, aktuelle Ist-Füllstand den vorgegebenen Füllstands-Schwellwerte h₁ erreicht oder unterschreitet, von einer Hinweis- und Signaleinrichtung der Steuereinrichtung ein zum Beispiel optischer und/oder akustischer Hinweis ausgegeben wird, dass der jeweilige Kanister 3 befüllt werden muss. Für den Fall, dass der neue, aktuelle Ist-Füllstand den vorgegebenen Füllstands-Schwellwerte h₂ erreichen oder unterschreiten sollte, wird von der Hinweis- und Signaleinrichtung der Steuereinrichtung 8 dagegen ein verschärftes Warnsignal ausgegeben, zum Beispiel ein Warnton und/oder der Betrieb des Farbdispenser 1 gestoppt und damit das Nachfüllen erzwungen.

Im Falle einer von der Steuereinrichtung 8 ermittelten Nachfüllnotwendigkeit für einen Kanister 3 wird dieser mit einer definierten Nachfüllmenge befüllt, wobei die Nachfüllmenge von der Steuereinrichtung 8 erfasst wird und/oder dieser übermittelt wird und/oder in diese eingegeben wird. Auf Basis dieser von der Steuereinrichtung 8 erfassten bzw. dieser übermittelten bzw. dieser eingegebenen Nachfüllmenge wird mittels einer Füllstand-Startwert-Setzeinheit der Steuereinrichtung ein definierter Startwert für den aktuellen Ist-Füllstand ermittelt, der sich aus der Summe eines der Nachfüllmenge entsprechenden Nachfüll-Füllstandswertes und dem letzten gespeicherten Ist-Füllstand zusammensetzt. Hierzu wird der Füllstand-Startwert-Setzeinheit jeweils der aktuell gespeicherte Ist-Füllstandswert übermittelt, wie dies in der Fig. 3 durch den strichliert eingezeichneten Pfeil symbolisch dargestellt ist. Dies alles kann grundsätzlich automatisiert von der Steuereinrichtung ermittelt, erfasst und vorgegeben werden.

Da sich bei einer derartigen Ermittlung bzw. Vorgabe des Startwerts gegebenenfalls in Verbindung mit dem Nachfüllvorgang bzw. der Genauigkeit der Erfassung der abgezogenen Menge an Farbpigmentpräparation Fehler aufaddieren können, ist es erforderlich, die Startwertvorgabe zu bestimmten Zeiten zu kalibrieren, das heißt mit dem tatsächlichen Ist-Füllstand im Kanister abzugleichen.

Hierzu weist die Steuereinrichtung 8 eine Kalibriereinheit auf, mittels der die Kalibrierung durchgeführt wird. Diese Kalibrierung erfolgt jedes Mal dann, wenn der Füllstand der Farbpigmentpräparation im Kanister 3 die Höhe h erreicht, weil dann der bevorzugt durch einen kapazitiven Sensor gebildete Kalibriersensor 30 anspricht und aufgrund einer Änderung seines elektrischen Feldes ein Signal (Pfeil 31) an die Kalibriereinheit der Steuereinrichtung 8 übermittelt. Die Steuereinrichtung 8 bzw. deren Kalibriereinheit weiß dann, dass der tatsächliche Ist-Füllstand im Kanister 3 exakt dem vorgegebenen bzw. vorbekannten und in der Steuereinrichtung 8 bzw. in der Kalibriereinheit abgespeicherten Kalibrier-Füllstand h entspricht und könnte dann zum Beispiel durch Vergleich mit dem errechneten aktuellen Ist-Füllstand ermitteln, ob bzw. wieweit der errechnete Ist-Füllstand von dem, dem Kalibrier-Füllstand entsprechenden tatsächlichen Füllstand abweicht und könnte dann, bei einer definierten Abweichung, den Kalibrier-Füllstand als aktuellen Ist-Wert anstelle des errechneten und aktuell in der Füllstands-Speichereinheit abgespeicherten Ist-Füllstandes den weiterführenden Berechnungen der Steuereinrichtung 8 zugrundelegen. Alternativ kann die Kalibriereinheit aber auch ohne einen derartigen Vergleich sofort den Kalibrier-Füllstand der Füllstands-Speichereinheit als neuen aktuellen Ist-Füllstand übermitteln, der den weiteren Berechnungen zugrunde zu legen ist. Diese Startwertvorgabe durch die Kalibriereinheit ist selbstverständlich in jedem Fall der rechnerischen Vorgabe vorrangig bzw. dieser überlagert, so dass im Falle einer Startwertvorgabe durch die Kalibriereinheit einzig und allein der Kalibrier-Füllstand von der Füllstands-Ermittlungseinheit als neuer Ist-Wert übernommen wird.

Damit wird auf einfache Weise ein selbstkalibrierendes System geschaffen, bei dem sich Fehler nicht in der zuvor dargestellten Weise aufaddieren können.

Um das Nachfüllen zu ermöglichen, weist der Kanister 3, wie dies insbesondere der Fig. 2 zu entnehmen ist, an einem eine Wartungsöffnung verschließenden Verschlussdeckel 19 eine Nachfüllöffnung auf, die einen gegenüber der Wartungsöffnung kleineren Öffnungsdurchmesser aufweist und zudem mittels eines separaten Nachfüllöffnung-Verschlussdeckels 4 verschlossen werden kann, wie dies bereits eingangs in Verbindung mit der Fig. 1 näher erläutert worden ist.

Zum Verschließen der Wartungsöffnung, die sich hier im Wesentlichen über die gesamte Behälteroberseite erstreckt, ist der Verschlussdeckel 19 mit randseitigen Laschen 20 ausgestattet. Mit diesen Laschen 20 übergreift der Verschlussdeckel 19 den Öffnungsrandbereich der Wartungsöffnung und ist an wandseitigen Rastnasen 21 sowie an gegenüberliegenden Außenwänden 29 des Kanisters 3 lösbar verrastet.

## Patentansprüche

1. Verfahren zum Betätigen einer Dosiervorrichtung (1) zur dosierten Abgabe von pumpfähigen Medien, insbesondere von Farbpigmentpräparationen, wobei die Dosiervorrichtung (1) eine Ausgabeeinrichtung (2) aufweist, die mit mehreren Kanistern (3) strömungstechnisch verbunden ist, wobei die Kanister (3) jeweils mit einer definierten Ausgangsfüllmenge eines abzugebenden Mediums befüllt sind oder werden und wobei die Dosiervorrichtung (1) eine Steuereinrichtung (8) aufweist, mittels der zu definierten Zeiten eine definierte Abgabemenge des Mediums aus wenigstens einem der Kanister (3) abgezogen und mittels einer Fördereinrichtung (10) zu der Ausgabeeinrichtung (2) gefördert wird, **dadurch gekennzeichnet,**
**dass** mittels der Steuereinrichtung (8) in Abhängigkeit von einer aus dem jeweiligen Kanister (3) abgezogenen Abgabemenge auch ein aktueller Ist-Füllstand ermittelt und/oder errechnet wird, wobei am Kanister (3) wenigstens ein Kalibriersensor (30) so angeordnet ist, dass dieser für den Fall, dass das Medium im Kanister wenigstens einen vorbekannten, in der Steuereinrichtung (8) gespeicherten Kalibrier-Füllstand erreicht, anspricht und an die Steuereinrichtung (8) ein entsprechendes Sensorsignal übermittelt, auf dessen Basis die Steuereinrichtung (8) den Kalibrier-Füllstand als tatsächlichen Ist-Füllstand erkennt und/oder als neuen, aktuellen Ist-Füllstand übernimmt,
**dass** mittels der Steuereinrichtung (8) zur Füllstandskontrolle und/oder Füllstandsermittlung ein jeweiliger aktueller Ist-Füllstand für die Kanister (3) dergestalt ermittelt wird, dass der jeweils aktuell von der Steuereinrichtung (8) gespeicherte Ist-Füllstand eines Kanisters (3) um den Wert reduziert wird, der der vom Kanister (3) abgezogenen Abgabemenge entspricht, und anschließend der um diese Abgabemenge reduzierte Wert den neuen, aktuellen Ist-Füllstand darstellt und entsprechend gespeichert wird,
**dass** die Steuereinrichtung (8) einen aktuell gespeicherten Ist-Füllstand mit wenigstens einem vorgegebenen Füllstands-Schwellwert vergleicht, wobei für den Fall, dass bei einem Kanister (3) ein neuer, aktueller Ist-Füllstand einen vorgegebenen Füllstands-Schwellwert erreicht oder unterschreitet, ein Nachfüllhinweis ausgegeben und/oder angezeigt wird, dass der Kanister (3) im Falle einer von der Steuereinrichtung (8) ermittelten Nachfüllnotwendigkeit mit einer definierten Nachfüllmenge befüllt wird, wobei die Nachfüllmenge von der Steuereinrichtung (8) erfasst wird und/oder dieser übermittelt wird und/oder in diese eingegeben wird,
**dass** die Steuereinrichtung (8) nach dem Befüllvorgang als Startwert für den aktuellen Ist-Füllstandswert einen Wert übernimmt, der sich aus der Summe eines der Nachfüllmenge entsprechenden Nachfüll-Füllstandswertes und dem letzten gespeicherten Ist-Füllstand zusammensetzt, und
**dass** für den Fall, dass der Füllstand des Mediums dem wenigstens einen Kalibrier-Füllstand entspricht der wenigstens eine Kalibriersensor (30) anspricht und an die Steuereinrichtung (8) ein Signal übermittelt, auf
dessen Basis die Steuereinrichtung (8) den Kalibrier-Füllstand als tatsächlichen Ist-Füllstand erkennt und/oder als neuen, aktuellen Ist-Füllstand übernimmt.

2. Verfahren nach Anspruch 1, **dadurch gekennzeichnet, dass** die Steuereinrichtung (8) im Anschluß an ein Ansprechen des wenigstens einen Kalibrier-Sensors (30) entweder bei einer von ihr festgestellten definierten Abweichung des dem Kalibrier-Füllstand entsprechenden tatsächlichen Ist-Füllstands von dem von der Steuereinrichtung (8) errechneten aktuellen Ist-Füllstand oder ohne weitere Überprüfung den Kalibrier-Füllstand als neuen aktuellen Ist-Füllstand übernimmt.

3. Verfahren nach Anspruch 1 oder 2, **dadurch gekennzeichnet, dass** der Steuereinrichtung (8) vor der erstmaligen Entnahme von Medium aus einem Kanister (3) ein einer Ausgangsfüllmenge entsprechender Ausgangsfüllstand des jeweiligen Kanisters (3) als Startwert für den aktuellen Ist-Füllstand vorgegeben und/oder eingegeben wird.

4. Verfahren nach einem der vorhergehenden Ansprüche, **dadurch gekennzeichnet, dass** der wenigstens eine Kalibriersensor (30) so am Kanister (3) angeordnet ist und/oder in einer solchen Kanisterhöhe angeordnet ist, dass der Kalibrier-Füllstand wenigstens einem vorgegebenen Füllstands-Schwellwert entspricht, bei dessen Erreichen von der Steuereinrichtung (8) ein Nachfüllhinweis angezeigt wird.

5. Verfahren nach einem der vorhergehenden Ansprüche, **dadurch gekennzeichnet, dass** von der Steuereinrichtung (8) für vorzugsweise jeden der Kanister (3) ein erster Füllstands-Schwellwert (h₁) vorgegeben ist, bei dessen Erreichen die Steuereinrichtung (8) einen Nachfüllhinweis für den oder die jeweiligen Kanister (3) ausgibt, und
dass von der Steuereinrichtung (8) für vorzugsweise jeden der Kanister (3) ein zweiter Füllstands-Schwellwert (h₂) vorgegeben ist, der einem niedrigeren Füllstand entspricht als der dem ersten Füllstands-Schwellwert (h₁) zugeordnete Füllstand, vorzugsweise einem MinimalFüllstand entspricht, bei dessen Erreichen die Steuereinrichtung (8) einen weiteren Warn- und/oder Nachfüllhinweis für den oder die jeweiligen Kanister (3) ausgibt, insbesondere die Dosiervorrichtung (1) solange deaktiviert wird, bis ein Nachfüllvorgang für den oder die jeweiligen Kanister (3) stattgefunden hat und/oder ein solcher erfasst und/oder eingegeben wird.

6. Verfahren nach einem der vorhergehenden Ansprüche, **dadurch gekennzeichnet, dass** ein Kalibriersensor (30) vorgesehen ist, dessen Sensorflächen auf gegenüberliegenden Seiten des Kanisters (3) und/oder an der Kanisteraußenwand (29) angeordnet sind.

7. Verfahren nach einem der vorhergehenden Ansprüche, **dadurch gekennzeichnet, dass** der wenigstens eine Kalibriersensor (30) als Foliensensor ausgebildet ist und/oder stoffschlüssig mit der Außenwand des Kanisters (3) verbunden ist, insbesondere dort aufgeklebt ist.

8. Dosiervorrichtung zur dosierten Abgabe von pumpfähigen Medien, insbesondere von Farbpigmentpräparationen, wobei die Dosiervorrichtung (1) eine Ausgabeeinrichtung (2) aufweist, die mit mehreren Kanistern (3) strömungstechnisch verbunden ist, wobei die Kanister (3) jeweils mit einer definierten Ausgangsfüllmenge eines abzugebenden Mediums befüllt sind oder befüllbar sind und wobei die Dosiervorrichtung (1) eine Steuereinrichtung (8) aufweist, mittels der zu definierten Zeiten eine definierte Abgabemenge des Mediums aus wenigstens einem der Kanister (3) abziehbar und mittels einer Fördereinrichtung (10) zu der Ausgabeeinrichtung (2) förderbar ist,
**dadurch gekennzeichnet,**
**dass** die Steuereinrichtung (8) eine Füllstands-Ermittlungseinheit aufweist, mittels der in Abhängigkeit von einer aus dem jeweiligen Kanister (3) abgezogenen Abgabemenge ein aktueller Ist-Füllstand ermittelbar und/oder errechenbar ist, wobei am Kanister (3) wenigstens ein signalübertragend mit der Steuereinrichtung (8) gekoppelter Kalibriersensor (30) so angeordnet ist, dass dieser für den Fall, dass das Medium im Kanister wenigstens einen vorbekannten, in der Steuereinrichtung (8) gespeicherten Kalibrier-Füllstand erreicht, anspricht und an die Steuereinrichtung (8) ein entsprechendes Sensorsignal übermittelt, auf dessen Basis die Steuereinrichtung (8) den Kalibrier-Füllstand als tatsächlichen Ist-Füllstand erkennt und/oder als neuen, aktuellen Ist-Füllstand übernimmt,
**dass** mittels der Steuereinrichtung (8) zur Füllstandskontrolle und/oder Füllstandsermittlung ein jeweiliger aktueller Ist-Füllstand für die Kanister (3) dergestalt ermittelt wird, dass der jeweils aktuell von der Steuereinrichtung (8) gespeicherte Ist-Füllstand eines Kanisters (3) um den Wert reduziert wird, der der vom Kanister (3) abgezogenen Abgabemenge entspricht, und anschließend der um diese Abgabemenge reduzierte Wert den neuen, aktuellen Ist-Füllstand darstellt und entsprechend gespeichert wird,
**dass** die Steuereinrichtung (8) einen aktuell gespeicherten Ist-Füllstand mit wenigstens einem vorgegebenen Füllstands-Schwellwert vergleicht, wobei für den Fall, dass bei einem Kanister (3) ein neuer, aktueller Ist-Füllstand einen vorgegebenen Füllstands-Schwellwert erreicht oder unterschreitet, ein Nachfüllhinweis ausgebbar und/oder angezeigt wird,
**dass** der Kanister (3) im Falle einer von der Steuereinrichtung (8) ermittelten Nachfüllnotwendigkeit mit einer definierten Nachfüllmenge befüllt wird, wobei die Nachfüllmenge von der Steuereinrichtung (8) erfasst wird und/oder dieser übermittelt wird und/oder in diese eingegeben wird,
**dass** die Steuereinrichtung (8) nach dem Befüllvorgang als Startwert für den aktuellen Ist-Füllstandswert einen Wert übernimmt, der sich aus der Summe eines der Nachfüllmenge entsprechenden Nachfüll-Füllstandswertes und dem letzten gespeicherten Ist-Füllstand zusammensetzt, und
**dass** für den Fall, dass der Füllstand des Mediums dem wenigstens einen Kalibrier-Füllstand entspricht der wenigstens eine Kalibriersensor (30) anspricht und an die Steuereinrichtung (8) ein Signal übermittelt, auf dessen Basis die Steuereinrichtung (8) den Kalibrier-Füllstand als tatsächlichen Ist-Füllstand erkennt und/oder als neuen, aktuellen Ist-Füllstand übernimmt.

9. Dosiervorrichtung nach Anspruch 8, **dadurch gekennzeichnet, dass** die Steuereinrichtung eine Kalibriereinheit aufweist, mittels der entweder auf der Basis einer von ihr mittels einer Vergleichereinheit festgestellten definierten Abweichung des Kalibrier-Füllstands als tatsächlicher Ist-Füllstand von dem von der Steuereinrichtung (8) ermittelten aktuellen Ist-Füllstand oder ohne weitere Überprüfung der Kalibrier-Füllstand als neuer aktueller Ist-Füllstand vorgebbar ist.

10. Dosiervorrichtung nach Anspruch 8 oder 9, **dadurch gekennzeichnet, dass** die Steuereinrichtung (8) eine Füllstand-Ermittlungseinheit aufweist, mittels der ein jeweiliger Ist-Füllstand für die Kanister (3) in Abhängigkeit von einer vom Kanister (3) abgezogenen Abgabemenge ermittelbar ist,
dass die Steuereinrichtung (8) eine Füllstand-Speichereinheit aufweist, in der der in Abhängigkeit von einer abgezogenen Abgabemenge reduzierte Füllstandswert als neuer, aktueller Ist-Füllstand speicherbar ist,
dass die Steuereinrichtung (8) eine Vergleichereinheit aufweist, mittels der ein aktuell gespeicherter Ist-Füllstand mit wenigstens einem vorgegebenen Füllstands-Schwellwert vergleichbar ist,
dass die Steuereinrichtung (8) eine Hinweis- und/oder Signaleinrichtung aufweist, mittels der ein festgestellter notwendiger Nachfüllvorgang anzeigbar ist,
dass die Steuereinrichtung (8) eine Füllstand-Startwert-Setzeinheit aufweist, mittels der ein Befüllvorgang erfassbar und/oder mittels der nach einem Befüllvorgang ein Startwert für den aktuellen Ist-Füllstand vorgebbar ist.

## Claims

1. Method for operating a metering apparatus (1) for dispensing pumpable media, in particular colour pigment preparations, in a metered manner, wherein the metering apparatus (1) has an output device (2) which is flow-connected to a plurality of canisters (3), wherein the canisters (3) have each been filled or are each filled with a defined initial filling quantity of a medium which is to be dispensed, and wherein the metering apparatus (1) has a control device (8) by means of which a defined dispensing quantity of the medium is drawn from at least one of the canisters (3) and delivered to the output device (2) by means of a delivery device (10) at defined times, **characterized**
**in that** a current actual filling level is also ascertained and/or calculated by means of the control device (8) depending on a dispensing quantity which is drawn from the respective canister (3), wherein at least one calibration sensor (30) is arranged on the canister (3) such that the said calibration sensor responds if the medium in the canister reaches at least one calibration filling level, which is already known and is stored in the control device (8), and transmits a corresponding sensor signal to the control device (8), the control device (8) identifying the calibration filling level as the actual filling level and/or taking the said calibration filling level as the new, current actual filling level on the basis of the said sensor signal,
**in that** a respective current actual filling level for the canisters (3) is ascertained by means of the control device (8), for the purpose of monitoring the filling level and/or ascertaining the filling level, in such a way that the actual filling level of a canister (3), which actual filling level is respectively currently stored by the control device (8), is reduced by the value which corresponds to the dispensing quantity which is drawn from the canister (3), and then the value which is reduced by this dispensing quantity represents the new, current actual filling level and is accordingly stored,
**in that** the control device (8) compares a currently stored actual filling level with at least one prespecified filling level threshold value, wherein, if a new, current actual filling level reaches or falls below a prespecified filling level threshold value in the case of a canister (3), a refilling instruction is output and/or displayed,
**in that** the canister (3) is filled with a defined refilling quantity in the case of the need for refilling being ascertained by the control device (8), wherein the refilling quantity is detected by the control device (8) and/or is transmitted to the said control device and/or is input into the said control device,
**in that** the control device (8), after the filling process, takes, as the starting value for the current actual filling level value, a value which is made up of the sum of a refilling filling level value, which corresponds to the refilling quantity, and of the actual filling level stored last, and
**in that**, if the filling level of the medium corresponds to the at least one calibration filling level, the at least one calibration sensor (30) responds and transmits a signal to the control device (8), the control device (8) identifying the calibration filling level as the current actual filling level and/or taking the said calibration filling level as the new, current actual filling level on the basis of the said signal.

2. Method according to Claim 1, **characterized in that** the control device (8), following a response of the at least one calibration sensor (30), takes the calibration filling level as the new current actual filling level either in the case of a defined deviation, which is established by the said control device, in the current actual filling level, which corresponds to the calibration filling level, from the current actual filling level which is calculated by the control device (8), or without further checking.

3. Method according to Claim 1 or 2, **characterized in that** an initial filling level of a canister (3), which initial filling level corresponds to an initial filling quantity, is prespecified to and/or input into the control device (8) as a starting value for the current actual filling level before medium is drawn from the respective canister (3) for the first time.

4. Method according to one of the preceding claims, **characterized in that** the at least one calibration sensor (30) is arranged on the canister (3) in such a way and/or is arranged at such a canister height that the calibration filling level corresponds at least to a prespecified filling level threshold value, a refilling instruction being displayed by the control device (8) when the said filling level threshold value is reached.

5. Method according to one of the preceding claims, **characterized in that** a first filling level threshold value (h₁) is prespecified by the control device (8) for preferably each of the canisters (3), the control device (8) outputting a refilling instruction for the respective canister or canisters (3) when the said filling level threshold value is reached, and
**in that** a second filling level threshold value (h₂) is prespecified by the control device (8) for preferably each of the canisters (3), the said second filling level threshold value corresponding to a lower filling level than the filling level which is associated with the first filling level threshold value (h₁), preferably corresponding to a minimum filling level, the control device (8) outputting a further warning and/or refilling instruction for the respective canister or canisters (3) when the said filling level threshold value is reached, in particular the metering apparatus (1) being deactivated until a refilling process for the respective canister or canisters (3) has taken place and/or a refilling process is detected and/or input.

6. Method according to one of the preceding claims, **characterized in that** a calibration sensor (30) is provided, the sensor areas of the said calibration sensor being arranged on opposite sides of the canister (3) and/or on the canister outer wall (29).

7. Method according to one of the preceding claims, **characterized in that** the at least one calibration sensor (30) is in the form of a film-type sensor and/or is connected in a cohesive manner to the outer wall of the canister (3), in particular is adhesively bonded there.

8. Metering apparatus for dispensing pumpable media, in particular colour pigment preparations, in a metered manner, wherein the metering apparatus (1) has an output device (2) which is flow-connected to a plurality of canisters (3), wherein the canisters (3) have each been filled or can each be filled with a defined initial filling quantity of a medium which is to be dispensed, and wherein the metering apparatus (1) has a control device (8) by means of which a defined dispensing quantity of the medium can be drawn from at least one of the canisters (3) and can be delivered to the dispensing device (2) by means of a delivery device (10) at defined times, **characterized**
**in that** the control device (8) has a filling level ascertaining unit by means of which a current actual filling level can be ascertained and/or can be calculated depending on a dispensing quantity which is drawn from the respective canister (3), wherein at least one calibration sensor (30), which is coupled to the control device (8) so as to transmit signals, is arranged on the canister (3) such that the said calibration sensor responds and transmits a corresponding sensor signal to the control device (8) if the medium in the canister reaches at least a calibration filling level which is already known and is stored in the control device (8), the control device (8) identifying the calibration filling level as the actual filling level and/or taking the said calibration filling level as the new, current actual filling level on the basis of the said sensor signal,
**in that** a respective current actual filling level for the canister (3) is ascertained by means of the control device (8), for the purpose of controlling the filling level and/or ascertaining the filling level, in such a way that the actual filling level of a canister (3), which actual filling level is respectively currently stored by the control device (8), is reduced by the value which corresponds to the dispensing quantity which is drawn from the canister (3), and then the value which is reduced by this dispensing quantity represents the new, current actual filling level and is accordingly stored,
**in that** the control device (8) compares a currently stored actual filling level with at least one prespecified filling level threshold value, wherein, if a new, current actual filling level reaches or falls below a prespecified filling level threshold value in the case of a canister (3), a refilling instruction can be output and/or is displayed,
**in that** the canister (3) is filled with a defined refilling quantity in the case of the need for refilling being ascertained by the control device (8), wherein the refilling quantity is detected by the control device (8) and/or is transmitted to the said control device and/or is input into the said control device,
**in that** the control device (8), after the filling process, takes, as the starting value for the current actual filling level value, a value which is made up of the sum of a refilling filling level value which corresponds to the refilling quantity and of the actual filling level stored last, and
**in that**, if the filling level of the medium corresponds to the at least one calibration filling level, the at least one calibration sensor (30) responds and transmits a signal to the control device (8), the control device (8) identifying the calibration filling level as the actual filling level and/or taking the said calibration filling level as the new, current actual filling level on the basis of the said signal.

9. Metering apparatus according to Claim 8, **characterized in that** the control device has a calibration unit by means of which the calibration filling level can be prespecified as the new current actual filling level either on the basis of a defined deviation, which is established by the said control device by means of a comparator unit, in the calibration filling level, as the actual filling level, from the current actual filling level which is ascertained by the control device (8), or without further checking.

10. Metering apparatus according to Claim 8 or 9, **characterized in that** the control device (8) has a filling level ascertaining unit by means of which a respective actual filling level for the canister (3) can be ascertained depending on a dispensing quantity which is drawn from the canister (3),
**in that** the control device (8) has a filling level memory unit in which the filling level value, which is reduced depending on a drawn dispensing quantity, can be stored as a new, current actual filling level,
**in that** the control device (8) has a comparator unit by means of which a currently stored actual filling level can be compared with at least one prespecified filling level threshold value,
**in that** the control device (8) has an indicator and/or signalling device by means of which an established required refilling process can be displayed,
**in that** the control device (8) has a filling level starting value setting unit by means of which a filling process can be detected and/or by means of which a starting value for the current actual filling level can be prespecified after a filling process.

## Revendications

1. Procédé pour actionner un dispositif de dosage (1) destiné à la distribution dosée de fluides aptes au pompage, notamment de préparation à base de pigments colorés, le dispositif de dosage (1) possédant un appareil de distribution (2) qui est relié en technique des fluides avec plusieurs bidons (3), les bidons (3) étant respectivement pleins ou remplis d'une quantité de remplissage initiale d'un fluide à distribuer et le dispositif de dosage (1) possédant un appareil de commande (8) au moyen duquel une quantité de distribution définie du fluide est prélevée d'au moins l'un des bidons (3) à des instants définis, puis transportée vers l'appareil de distribution (2) au moyen d'un appareil de transport (10), **caractérisé**
**en ce qu'**un niveau de remplissage réel actuel est également déterminé et/ou calculé au moyen de l'appareil de commande (8) en fonction d'une quantité de distribution prélevée du bidon (3) respectif, au moins un détecteur de calibrage (30) étant disposé sur le bidon (3) de telle sorte que celui-ci se déclenche dans le cas où le fluide dans le bidon atteint au moins un niveau de remplissage de calibrage connu à l'avance, mémorisé dans l'appareil de commande (8), et communique à l'appareil de commande (8) un signal de capteur correspondant sur la base duquel l'appareil de commande (8) reconnaît le niveau de remplissage de calibrage comme niveau de remplissage réel effectif et/ou le prend en charge en tant que nouveau niveau de remplissage réel actuel,
**en ce qu'**un niveau de remplissage réel actuel pour le bidon (3) est déterminé au moyen de l'appareil de commande (8) en vue du contrôle du niveau de remplissage et/ou de la détermination du niveau de remplissage de telle sorte que le niveau de remplissage d'un bidon (3) respectivement mémorisé actuellement par l'appareil de commande (8) est réduit de la valeur qui correspond à la quantité de distribution prélevée du bidon (3), et la valeur réduite de cette quantité de distribution représente ensuite le nouveau niveau de remplissage réel actuel et est mémorisée en conséquence,
**en ce que** l'appareil de commande (8) compare un niveau de remplissage réel mémorisé actuel avec au moins une valeur de seuil de niveau de remplissage prédéfinie, une notification d'appoint étant délivrée et/ou indiquée dans le cas où, au niveau d'un bidon (3), un nouveau niveau de remplissage réel actuel atteint ou devient inférieur à une valeur de seuil de niveau de remplissage prédéfinie,
**en ce que** dans le cas d'une nécessité d'appoint déterminée par l'appareil de commande (8), le bidon (3) est rempli avec une quantité d'appoint définie, la quantité d'appoint étant détectée par l'appareil de commande (8) et/ou étant communiquée à celui-ci et/ou étant saisie dans celui-ci,
**en ce que** l'appareil de commande (8), après l'opération de remplissage, prend comme valeur de départ pour le niveau de remplissage réel actuel une valeur qui se compose de la somme d'une valeur de niveau de remplissage d'appoint correspondant à la quantité d'appoint et du dernier niveau de remplissage réel mémorisé, et
**en ce que** dans le cas où le niveau de remplissage du fluide correspond à l'au moins un niveau de remplissage de calibrage, l'au moins un détecteur de calibrage (30) se déclenche et communique à l'appareil de commande (8) un signal à la base duquel l'appareil de commande (8) reconnaît le niveau de remplissage de calibrage comme niveau de remplissage réel effectif et/ou le prend en charge en tant que nouveau niveau de remplissage actuel.

2. Procédé selon la revendication 1, **caractérisé en ce que** l'appareil de commande (8), suite à un déclenchement de l'au moins un détecteur de calibrage (30), soit en présence d'un écart défini constaté par celui-ci du niveau de remplissage réel effectif correspondant au niveau de remplissage de calibrage par rapport au niveau de remplissage réel actuel calculé par l'appareil de commande (8), soit sans contrôle supplémentaire, prend en charge le niveau de remplissage de calibrage comme nouveau niveau de remplissage réel actuel.

3. Procédé selon la revendication 1 ou 2, **caractérisé en ce qu'**un niveau de remplissage initial correspondant à une quantité de remplissage initiale du bidon (3) respectif est prédéfini et/ou saisi en tant que valeur de départ pour le niveau de remplissage réel actuel dans l'appareil de commande (8) avant le premier prélèvement de fluide d'un bidon (3).

4. Procédé selon l'une des revendications précédentes, **caractérisé en ce que** l'au moins un détecteur de calibrage (30) est disposé de telle sorte sur le bidon (3) et/ou disposé à une telle hauteur de bidon que le niveau de remplissage de calibrage correspond au moins à une valeur de seuil de niveau de remplissage prédéfinie qui, lorsqu'elle est atteinte, provoque l'affichage d'une notification d'appoint par l'appareil de commande (8).

5. Procédé selon l'une des revendications précédentes, **caractérisé en ce qu'**une première valeur de seuil de niveau de remplissage (h₁) est prédéfinie de préférence pour chacun des bidons (3) par l'appareil de commande (8) qui, lorsqu'elle est atteinte, provoque la délivrance par l'appareil de commande (8) d'une notification d'appoint pour le ou les bidons (3) correspondants, et
**en ce qu'**une deuxième valeur de seuil de niveau de remplissage (h₂) est prédéfinie de préférence pour chacun des bidons (3) par l'appareil de commande (8), laquelle correspond à un niveau de remplissage plus faible que le niveau de remplissage associé à la première valeur de seuil de niveau de remplissage (h₁), de préférence à un niveau de remplissage minimal, et qui, lorsqu'elle est atteinte, provoque la délivrance par l'appareil de commande (8) d'une notification d'alerte et/ou d'appoint supplémentaire pour le ou les bidons (3) correspondants, notamment la désactivation du dispositif de dosage (1) jusqu'à ce qu'une opération d'appoint ait eu lieu pour le ou les bidons (3) correspondants et/ou qu'une telle opération ait été détectée et/ou saisie.

6. Procédé selon l'une des revendications précédentes, **caractérisé en ce qu'**il existe un détecteur de calibrage (30) dont la surface de détection est disposée sur les côtés opposés du bidon (3) et/ou sur la paroi extérieure du bidon (29).

7. Procédé selon l'une des revendications précédentes, **caractérisé en ce que** l'au moins un détecteur de calibrage (30) est réalisé sous la forme d'un détecteur à membrane et/ou est relié avec liaison de matières avec la paroi extérieure du bidon (3), y est notamment collé.

8. Dispositif de dosage (1) destiné à la distribution dosée de fluides aptes au pompage, notamment de préparation à base de pigments colorés, le dispositif de dosage (1) possédant un appareil de distribution (2) qui est relié en technique des fluides avec plusieurs bidons (3), les bidons (3) étant respectivement pleins ou remplissables d'une quantité de remplissage initiale d'un fluide à distribuer et le dispositif de dosage (1) possédant un appareil de commande (8) au moyen duquel une quantité de distribution définie du fluide peut être prélevée d'au moins l'un des bidons (3) à des instants définis, puis peut être transportée vers l'appareil de distribution (2) au moyen d'un appareil de transport (10), **caractérisé**
**en ce que** l'appareil de commande (8) possède une unité de détermination du niveau de remplissage au moyen de laquelle un niveau de remplissage réel actuel peut être déterminé et/ou calculé en fonction d'une quantité de distribution prélevée du bidon (3) respectif, au moins un détecteur de calibrage (30) relié en transmission de signaux à l'appareil de commande (8) étant disposé sur le bidon (3) de telle sorte que celui-ci se déclenche dans le cas où le fluide dans le bidon atteint au moins un niveau de remplissage de calibrage connu à l'avance, mémorisé dans l'appareil de commande (8), et communique à l'appareil de commande (8) un signal de capteur correspondant sur la base duquel l'appareil de commande (8) reconnaît le niveau de remplissage de calibrage comme niveau de remplissage réel effectif et/ou le prend en charge en tant que nouveau niveau de remplissage réel actuel,
**en ce qu'**un niveau de remplissage réel actuel pour le bidon (3) est déterminé au moyen de l'appareil de commande (8) en vue du contrôle du niveau de remplissage et/ou de la détermination du niveau de remplissage de telle sorte que le niveau de remplissage d'un bidon (3) respectivement mémorisé actuellement par l'appareil de commande (8) est réduit de la valeur qui correspond à la quantité de distribution prélevée du bidon (3), et la valeur réduite de cette quantité de distribution représente ensuite le nouveau niveau de remplissage réel actuel et est mémorisée en conséquence,
**en ce que** l'appareil de commande (8) compare un niveau de remplissage réel mémorisé actuel avec au moins une valeur de seuil de niveau de remplissage prédéfinie, une notification d'appoint pouvant être délivrée et/ou étant indiquée dans le cas où, au niveau d'un bidon (3), un nouveau niveau de remplissage réel actuel atteint ou devient inférieur à une valeur de seuil de niveau de remplissage prédéfinie,
**en ce que** dans le cas d'une nécessité d'appoint déterminée par l'appareil de commande (8), le bidon (3) est rempli avec une quantité d'appoint définie, la quantité d'appoint étant détectée par l'appareil de commande (8) et/ou étant communiquée à celui-ci et/ou étant saisie dans celui-ci,
**en ce que** l'appareil de commande (8), après l'opération de remplissage, prend comme valeur de départ pour le niveau de remplissage réel actuel une valeur qui se compose de la somme d'une valeur de niveau de remplissage d'appoint correspondant à la quantité d'appoint et du dernier niveau de remplissage réel mémorisé, et
**en ce que** dans le cas où le niveau de remplissage du fluide correspond à l'au moins un niveau de remplissage de calibrage, l'au moins un détecteur de calibrage (30) se déclenche et communique à l'appareil de commande (8) un signal à la base duquel l'appareil de commande (8) reconnaît le niveau de remplissage de calibrage comme niveau de remplissage réel effectif et/ou le prend en charge en tant que nouveau niveau de remplissage actuel.

9. Dispositif de dosage selon la revendication 8, **caractérisé en ce que** l'appareil de commande possède une unité de calibrage au moyen de laquelle le niveau de remplissage de calibrage peut être prédéfini comme nouveau niveau de remplissage réel actuel soit en se basant sur un écart défini constaté par celle-ci, au moyen d'une unité de comparaison, du niveau de remplissage de calibrage en tant que niveau de remplissage réel effectif par rapport au niveau de remplissage réel actuel calculé par l'appareil de commande (8), soit sans contrôle supplémentaire.

10. Dispositif de dosage selon la revendication 8 ou 9, **caractérisé en ce que** l'appareil de commande (8) possède une unité de détermination du niveau de remplissage au moyen de laquelle un niveau de remplissage réel respectif pour les bidons (3) peut être déterminé en fonction d'une quantité de distribution prélevée du bidon (3),
**en ce que** l'appareil de commande (8) possède une unité de mémorisation de niveau de remplissage dans laquelle la valeur de niveau de remplissage réduite d'une quantité de distribution prélevée peut être mémorisée en tant que nouveau niveau de remplissage réel actuel,
**en ce que** l'appareil de commande (8) possède une unité de comparaison au moyen de laquelle un niveau de remplissage réel mémorisé actuel peut être comparé avec au moins une valeur de seuil de niveau de remplissage prédéfinie,
**en ce que** l'appareil de commande (8) possède un appareil de notification et/ou de signalisation au moyen duquel une opération d'appoint constatée nécessaire peut être indiquée,
**en ce que** l'appareil de commande (8) possède une unité de définition de valeur de départ de niveau de remplissage au moyen de laquelle une opération de remplissage peut être détectée et/ou au moyen de laquelle une valeur de départ pour le niveau de remplissage réel actuel peut être prédéfinie après une opération de remplissage.
